# EUROPÄISCHE PATENTANMELDUNG

(11) **EP 0 847 879 A1**
(43) Veröffentlichungstag der Anmeldung: **17.06.1998**
(21) Anmeldenummer: 96119934.6
(22) Anmeldetag: 12.12.1996
(51) Int. Cl.: B60C 15/00, B60C 15/06

(54) **Gürtelreifen**

(71) Anmelder: Continental Aktiengesellschaft, 30165 Hannover (DE)
(72) Erfinder: Behnsen, Klaus, 30453 Hannover (DE); Knauf, Werner, 31515 Wunstorf (DE); Kuhlmann, Eckhard, 30455 Hannover (DE)

(57) **Zusammenfassung**

Ein Gürtelreifen, insbesondere für Kraftfahrzeuge, mit einer inneren Karkassenschicht (2), deren Endabschnitte von der Reifeninnenseite (6) zur Reifenaußenseite (5) um einen ringförmigen Wulstkern (1) herumgelegt sind und zur Bildung eines Verkopplungspunktes (3) der äußere Strang (2b) der Karkassenschicht (2) mit seinem Ende an den innen liegenden Strang (2a) angelegt ist, zeichnet sich dadurch aus, daß die Karkassenschicht (2) im wesentlichen tangential an den Wulstkern (1) herangeführt und um ihn herumgelegt ist und die beiden Stränge (2a, 2b) zwischen Wulstkern (1) und Verkopplungspunkt (3) geradlinig und gleichschenklig verlaufen. Dadurch wird die Stabilität des Reifens wesentlich erhöht, weil die Karkasse nur Zugkräfte aufnimmt. Eine Wulstversteifung und eingelegte keilförmige Profilkerne können entfallen.

## Beschreibung

Die Erfindung betrifft einen Gürtelreifen, insbesondere für Kraftfahrzeuge.

Ein Gürtelreifen mit einer inneren Karkassenschicht, deren Endabschnitte von der Reifeninnenseite zur Reifenaußenseite um einen ringförmigen Wulstkern herumgelegt sind und zur Bildung eines Verkopplungspunktes der äußere Strang der Karkassenschicht mit Seinem Ende an den innen liegenden Strang angelegt ist, ist beispielsweise in der EP-B 0 250 605 offenbart.

Die US-A 5,261,476 offenbart einen Radialreifen, bei dem die Karkasslage um einen Hexagonalkern herumgelegt ist und der äußere Strang und der innen liegende Strang geradlinig verlaufen, jedoch nicht zu einem Verkoppelungspunkt zusammengeführt sind. Das Kernprofil zwischen den beiden Strängen ist weich, aber von unterschiedlicher Härte ausgebildet. Der obere Teil des Kernprofils weist eine Härte von 58 bis 60 Shore A und der untere Teil eine Härte von nicht mehr als 55 Shore A auf. Auch aus der DE-A 28 28 241 ist es bekannt, das Kernprofil aus weichem Gummi auszubilden.

An moderne Fahrzeugreifen werden eine Menge Anforderungen gestellt. Neben einem guten Dämpfungsverhalten soll der Reifen u.a. auch eine hohe Laufleistung gewährleisten und auch über gewisse Notlaufeigenschaften verfügen. Entsprechend hochwertige Materialien müssen bei der Herstellung der aus mehreren Lagen aufgebauten Karkassenschicht sowie für den Reifenaufbau an sich und den Laufstreifen Verwendung finden. Die zum Einsatz kommenden Materialien sind teuer. Da der Reifen bei einem Fahrzeug zu den ungefederten Massen gehört, ist anzustreben, sein Gewicht möglichst niedrig zu halten. Bei dem bekannten Reifen tritt im Bereich des um den Wulstkern umgeschlagenen Karkassenendes eine Zug-/Druckbelastung auf, die zu einer Verformung der Karkasse (S-Schlag) und damit auch zu einer Verformung des Reifens führt. Das führt zum Abheben der Reifenzehe beim Verlassen der Aufstandsfläche, was nicht nur den Rollwiderstand (Verschleiß), sondern auch das Abrollgeräusch erhöht.

Von dieser Problemstellung ausgehend, soll der gattungsgemäße Reifen verbessert werden. Insbesondere soll die Druckbelastung im Bereich des umgeschlungenen Karkassenendes vermieden werden.

Die Problemlösung erfolgt bei dem eingangs erläuterten Gürtelreifen durch folgende Merkmale:
- die Endabschnitte einer Karkassenschicht (2) sind von der Reifeninnenseite (6) zur Reifenaußenseite (5) an einen ringförmigen Wulstkern (1) im wesentlichen tangential herangeführt und um diesen herumgelegt,
- der äußere Strang (2b) der Karkassenschicht (2) liegt mit seinem Ende an dem innen liegenden Strang (2a) an,
- die Anlagefläche der Stränge (2a, 2b) bildet einen unteren, dem Wulstkern (1) zugewandten Verkoppelungspunkt (3) und einen oberen Verkoppelungspunkt (3') aus,
- die beiden Stränge (2a, 2b) verlaufen geradlinig und gleichschenklig und im unteren Verkoppelungspunkt (3) spitzwinklig zusammen,
- dar zwischen den Strängen (2a, 2b) liegende Kernprofil (4) weist eine Härte von 40 bis 60 Shore A auf,
- die Länge (L) zwischen dem unteren Verkoppelungspunkt (3) und dem oberen Verkoppelungspunkt (3') beträgt mindestens 3 mm pro bar Innendruck des Reifens.

Dadurch, daß die Karkassenschicht im wesentlichen tangential an den Wulstkern herangeführt und um ihn herumgelegt ist und die beiden Stränge zwischen Wulstkern und Verkopplungspunkt geradlinig und gleichschenklig verlaufen, treten in der Karkassenschicht nur Zugkräfte auf (Seilzug-Prinzip). Durch den Fortfall der Druckkräfie wird der S-Schlag der Karkassenschicht eliminiert. Die Karkasse zieht sich folglich selbständig auf die ideale Radiallinie. Gegenüber vergleichbaren, flach dem Stand der Technik konstruierten Reifen, muß die Karkasse folglich kürzer ausgebildet sein, wodurch eine Materialeinsparung resultiert.

Durch die spitzwinklige Zusammenführung der Stränge im Verkoppelungspunkt kann die um den Wulstkern herumgelegte Schlaufe schlank ausgebildet werden. Insbesondere im Wulstbereich kann der Reifen durch diese Maßnahme schlanker gehalten werden. Vorteilhaft ist es, wenn der Winkel zwischen den Strängen etwa 20° beträgt. Die weiche Ausführung des Kernprofils mit einer Härte von 40 bis 60 Shore A und insbesondere vorzugsweise 50 Shore A gestattet es, daß die Stränge sich aufweiten, wenn der Reifen belastet wird, was zu einer Entlastung des Seilzuges führt. Die Karkassenschicht wird dadurch in der Reifenaufstandsfläche von Druckkräften bereit.

Dadurch, daß die Länge zwischen dem unteren Verkoppelungspunkt und dem oberen Verkoppelungspunkt von dem Innendruck des Reifens abhängig ausgebildet wird, wird das eingesetzte Material in bezug auf die Festigkeit des Reifens optimiert. Bei LKW-Reifen, die mit einem hohen Innendruck betrieben werden, sind die Stränge über einen entsprechend langen Bereich aneinandergelegt, während bei PKW-Reifen, die mit vergleichsweise geringem Innendruck betrieben werden, die Anlagefläche entsprechend kurz ausgebildet ist.

Das Kernprofil kann aus zur Ummantelung des Karkasskordes verwendeten Material (Karkassmischung) bestehen. Dann kann auf das einen weiteren Arbeitsschritt bei der Herstellung erfordernde Einlegen eines Profilkernes aus einem anderen Material verzichtet werden. Dadurch tritt nicht nur eine Reduzierung der Herstellkosten, sondern auch eine Gewichtsreduzierung des Reifens ein.

Ein Verzicht auf die Wulstverstärkung hat außerdem den Vorteil, daß in der Wulstsohle unterhalb des Kerns keine Scheuerungszone mehr besteht.

Weiterhin vorteilhaft ist es, wenn das Hornprofil gegenüber dem Kernprofil hart ausgebildet wird und eine Härte von 70 - 95 Shore A, insbesondere 85 Shore A aufweist und unterhalb des Verkopplungspunktes endet.

Die nur Zugkräfte aufnehmende Karkassenschicht kann im Zenit des Reifens geteilt sein, wobei die Trennfuge eine Breite von mindestens 30 mm aufweist. Ohne Festigkeitseinbußen kann dadurch eine weitere Gewichts- und Kostenreduzierung bei der Herstellung erreicht werden.

Wenn die Stränge der Karkassenschicht parallel zu den entsprechenden Außenseiten des Reifens verlaufen, ist die Materialstärke zwischen Karkassenschicht und Reifeninnerem konstant, so daß die Diffusion besser beherrschbar wird der Reifen luftdichter bei gleichmäßiger Karkassenspannung wird.

Der untere Verkopplungspunkt wird vorzugsweise unterhalb des Punktes mit der maximalen axialen Ausdehnung bei belastetem Reifen gelegt.

Bei Anwendung aller bevorzugten Merkmalen ist es möglich, gegenüber einem herkömmlichen Reifen eine Gewichtseinsparung von zirka 15 kg zu erzielen.

Anhand einer Zeichnung soll die Erfindung nachfolgend näher beschrieben werden. Es zeigt:
- Figur 1 -: die schematische Darstellung eines erfindungsgemäß ausgebildeten Reifens im Teilquerschnitt,
- Figur 2 -: den Querschnitt einer Ausführungsform als Prinzip-Skizze.

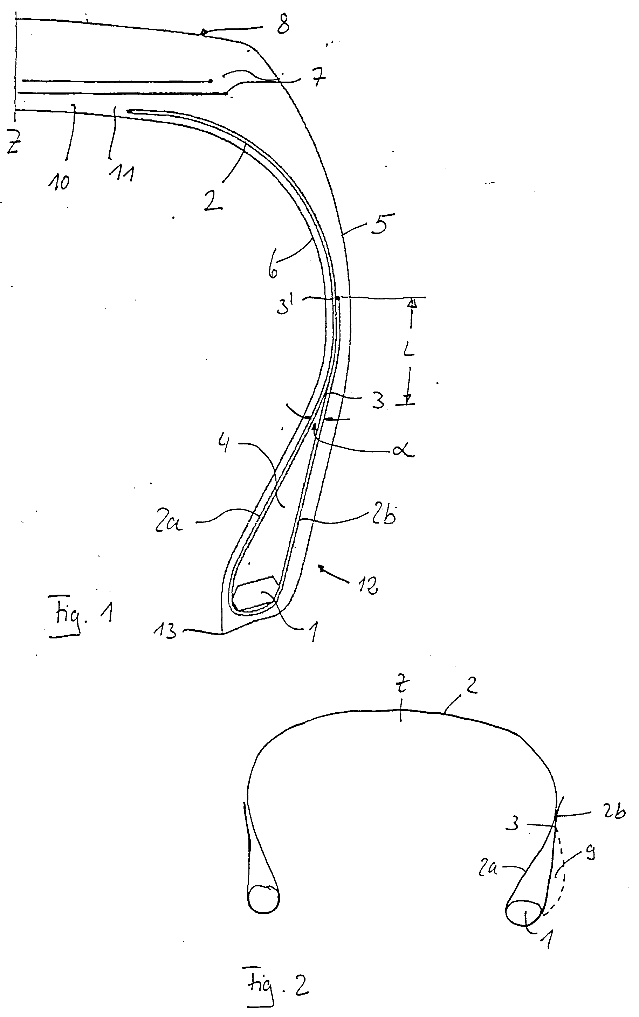

Der Reifen besteht aus der Karkasse 2, einer luftdichten Gummischicht 11, dem Gürtel 7, der darüber angeordneten Lauffläche 8 sowie dem Wulst 12 mit dem darin angeordneten Wulstkern 1. Die Karkasse 2 besteht üblicherweise aus einer luftdichten Gummischicht, die Innenseele genannt wird, auf die das sogenannte Einlagenmaterial aus in Gummimaterial eingebetteten Einlagefäden (Kord) aufgelegt wird. Die Karkasse 2 ist an ihren beiden Enden schleifenförmig um den Wulstkern 1 herumgeführt und der nach oben zurückgeführte Strang 2b wird an den nach unten führenden Strang 2a der Karkasse 2 in Höhe der maximalen axialen Breite des Reifens zur Ausbildung eines Verkopplungspunktes 3 angelegt. Dabei liegt das Gummi beider Stränge 2a, 2b der Karkasse 2 aneinander. Zwischen dem unteren Verkopplungspunkt 3 und dem Wulstkern 1 verlaufen die Stränge 2a, 2b geradlinig und gleichschenklig. Der von ihnen eingeschlossene Winkel am Verkopplungspunkt 3 beträgt etwa 20°, so daß eine möglichst schlanke Ausbildung der Schlaufe erreicht wird. Die Stränge 2a, 2b laufen tangential an den Wulstkern 1 heran und um diesen herum. Der Wulstkern 1 kann hexagonal oder rund sein, oder aber auch jede andere Form aufweisen. Das bei Gürtelreifen herkömmliche Bauart üblicherweise zwischen den Strängen 2a und 2b befindliche keilförmige Kernprofil, das separat eingelegt werden muß, kann vollständig entfallen und das Kernprofil 4 möglichst weich ausgebildet werden, indem die zur Herstellung der Karkasse 2 verwendete Gummimischung auch als Kernprofil Verwendung findet. Das weiche Kernprofil 4 bietet den Vorteil, daß sich die Stränge 2a, 2b im unteren Verkopplungspunkt 3 bei Belastung zunächst auseinander bewegen können, so daß die Schlaufe größer wird. Die Länge L zwischen dem unteren Verkopplungspunkt 3 und dem oberen Verkopplungspunkt 3' ist so gewählt, daß sie mindestens 3 mm pro bar Innendruck beträgt. Der innere Strang 2a verläuft parallel zur Reifeninnenseite 6 und der äußere Strang 2b parallel zur Reifenaußenseite 5. Alternativ kann ein Hornprofil 9 vorgesehen sein, das gegenüber dem Kernprofil hart ist. Es hat sich gezeigt, daß es vorteilhaft ist, wenn das Kernprofil 4 eine Shore-Härte von 40 - 60 und das Hornprofil 9 von 70 - 95 hat. Der untere Verkopplungspunkt 3 liegt gerechnet von der Unterkante 13 des Reifens auf etwa 20 - 30 % der radialen Höhe oder 10 - 20 % der radialen Höhe unterhalb der maximalen axialen Breite, so daß die Länge L des Lagenschlusses vom unteren Verkopplungspunkt 3 zum oberen Verkopplungspunkt 3' den Punkt der maximalen axialen Breite des Reifens überdeckt. Durch den geradlinigen Verlauf der Stränge 2a, 2b zwischen unterem Verkopplungspunkt 3 und Wulstkern 1 werden von der Karkasse 2 nur Zugkräfte aufgenommen, wodurch die Wandstärke im Wulst- und Seitenwandbereich gegenüber herkömmlichen Reifen reduziert werden kann. Durch den Fortfall der zwei Profile im Wulst 12 und die Wulstverstärkung kann eine Gewichtseinsparung von bis zu 15 kg gegenüber vergleichbaren herkömmlichen Reifen erhalten werden.

Die Karkasse 2 kann im Zenit Z des Reifens getrennt sein, wobei die Trennungsfuge 10 insgesamt mindestens 30 mm beträgt. Das Hornprofil 9 endet unterhalb des unteren Verkopplungspunktes 3.

### Bezugszeichenliste

- 1: Wulstkern
- 2: Karkasse
- 2a: innerer Strang
- 2b: äußerer Strang
- 3: unterer Verkopplungspunkt
- 3': oberer Verkopplungspunkt
- 4: Kernprofil
- 5: Reifenaußenseite
- 6: Reifeninnenseite
- 7: Gürtel
- 8: Lauffläche
- 9: Hornprofil
- 10: Trennfuge
- 11: Gummi
- 12: Wulst
- 13: untere Reifenkante
- L: Länge
- Z: Zenit

## Patentansprüche

1. Gürtelreifen, insbesondere für Kraftfahrzeuge, mit folgenden Merkmalen:
- die Endabschnitte einer Karkassenschicht (2) sind von der Reifeninnenseite (6) zur Reifenaußenseite (5) an einen ringförmigen Wulstkern (1) im wesentlichen Langential herangeführt und um diesen herumgelegt,
- der äußere Strang (2b) der Karkassenschicht (2) liegt mit seinem Ende an dem innen liegenden Strang (2a) an,
- die Anlagefläche der Stränge (2a, 2b) bildet einen unteren, dem Wulstkern (1) zugewandten Verkoppelungspunkt (3) und einen oberen Verkoppelungspunkt (3') aus,
- die beiden Stränge (2a, 2b) verlaufen geradlinig und gleichschenklig und im unteren Verkoppelungspunkt (3) spitzwinklig zusammen,
- das zwischen den Strängen (2a, 2b) liegende Kernprofil (4) weist eine Härte von 40 bis 60 Shore A auf,
- die Länge (L) zwischen dem unteren Verkoppelungspunkt (3) und dem oberen Verkoppelungspunkt (3') beträgt mindestens 3 mm pro bar Innendruck des Reifens.

2. Gürtelreifen nach Anspruch 1, **dadurch gekennzeichnet, daß** der Winkel α zwischen den Strängen (2a, 2b) etwa 20° beträgt.

3. Gürtelreifen nach Anspruch 1, **dadurch gekennzeichnet, daß** das Hornprofil (9) gegenüber dem Kernprofil (4) hart ist.

4. Gürtelreifen nach Anspruch 1, **dadurch gekennzeichnet, daß** ausschließlich der Wulstkern (1) zur Wulstverstärkung dient.

5. Gürtelreifen nach Anspruch 3, **dadurch gekennzeichnet, daß** das Hornprofil (9) eine Härte von 70 - 95 Shore A aufweist und unterhalb des Verkopplungspunktes (3) endet.

6. Gürtelreifen nach Anspruch 1, **dadurch gekennzeichnet, daß** die Karkassenschicht (2) im Zenit (Z) des Reifens geteilt ist.

7. Gürtelreifen nach Anspruch 6, **dadurch gekennzeichnet, daß** die Trennfuge (10) der Karkassenschicht (2) mindestens 30mm breit ist.

8. Gürtelreifen nach einem oder mehreren der vorstehenden Ansprüche, **dadurch gekennzeichnet, daß** der innere Strang (2a) parallel zur inneren Reifenkontur (6) und der äußere Strang (2b) parallel zur äußeren Reifenkontur (5) verläuft.

9. Gürtelreifen nach Anspruch 1, **dadurch gekennzeichnet, daß** das Kernprofil (4) aus dem zur Ummantelung des Karkassenkordes verwendeten Material (Karkassmischung) besteht.
